# EUROPEAN PATENT APPLICATION

(11) **EP 4 813 801 A1**
(43) Date of publication of application: **30.09.2026**
(21) Application number: 23959482.3
(22) Date of filing: 24.11.2023
(51) Int. Cl.: B62D 1/16

(54) **STEERING SHAFT**

(71) Applicant: JTEKT CORPORATION, Kariya-shi, Aichi 448-8652 (JP)
(72) Inventor: KAWAMURA, Naofumi, Kariya-shi, Aichi 448-8652 (JP); OOSONO, Naohiro, Kariya-shi, Aichi 448-8652 (JP); EBISU, Tetsuya, Kariya-shi, Aichi 448-8652 (JP)
(74) Representative: Winter, Brandl - Partnerschaft mbB
(86) International application number: PCT/JP2023/042124
(87) International publication number: WO 2025/109740

(57) **Abstract**

A steering shaft (10) includes an input shaft (11), an output shaft (12), and a torsion bar (13). The input shaft includes a first end portion to which torque is applied, and a second end portion provided with an abutting portion (11B). The output shaft includes an input shaft insertion portion (12D, 12E) into which the second end portion of the input shaft is inserted. The input shaft insertion portion opens to a first end portion of the output shaft. An inner end face of the input shaft insertion portion in an axial direction includes a recess (12G). A portion of the input shaft, externally exposed from the input shaft insertion portion, includes sensor components (16, 17) that face the first end portion of the output shaft in the axial direction. An axial direction clearance, between a distal end face of the abutting portion and an inner end face of the recess facing the distal end face, is narrower than an axial direction clearance between the sensor components and the first end portion of the output shaft.

## Description

### TECHNICAL FIELD

The present disclosure relates to a steering shaft.

### BACKGROUND ART

A steering shaft according to Patent Document 1, for example, includes an upper shaft and a lower shaft. A first end portion of the upper shaft is linked to a steering wheel. The lower shaft includes an input shaft, an output shaft, and a torsion bar. The torsion bar links the input shaft and the output shaft to each other.

A first end portion of the input shaft is linked to a second end portion of the upper shaft through spline fitting. The input shaft includes a fixing hole. The fixing hole opens to a second end portion of the input shaft. The output shaft is a stepped cylindrical body having a circular cross-sectional shape. The second end portion of the input shaft is rotatably inserted into an insertion portion provided at a first end portion of the output shaft.

A first end portion of the torsion bar is fitted into the fixing hole of the input shaft. The first end portion of the torsion bar is integrally rotatable with the input shaft. A second end portion of the torsion bar is fitted to an inner periphery of a second end portion of the output shaft. The second end portion of the torsion bar is integrally rotatable with the output shaft.

### Related Art Documents

### Patent Documents

Patent Document 1: Japanese Unexamined Patent Application Publication No. 2023-132532 (JP 2023-132532 A)

### SUMMARY OF THE INVENTION

### Problem to be Solved by the Invention

There are the following concerns regarding the steering shaft of Patent Document 1. That is to say, in a case in which the output shaft is a stepped cylindrical body, there is a concern that there may be portions at which wall thickness of the output shaft is thin, depending on an inner diameter or a depth of the insertion portion. The depth is a length of the insertion portion in an axial direction. In conjunction therewith, there is a concern that strength of the output shaft may decrease.

### Means for Solving the Problem

A steering shaft includes an input shaft, an output shaft, and a torsion bar. The input shaft includes an input shaft main body that includes a first end portion to which torque is applied by operation of a steering wheel and a second end portion at which a fixing hole that is a blind hole extending in an axial direction opens, and an abutting portion that is provided at the second end portion of the input shaft main body, and that has a diameter smaller than that of the input shaft main body. The output shaft is a cylindrical body that has a circular cross-sectional shape with both ends open in the axial direction, and includes a large-diameter portion including a first end portion of the output shaft and a small-diameter portion including a second end portion of the output shaft. The torsion bar includes a first end portion that is fixed to the input shaft in a state of being press-fitted into the fixing hole, and a second end portion that is fixed to the output shaft in a state of being press-fitted within the output shaft. The large-diameter portion includes an input shaft insertion portion that opens to the first end portion of the output shaft, and a second end portion of the input shaft is rotatably inserted into the input shaft insertion portion. The small-diameter portion includes a torsion bar insertion portion that opens to the second end portion of the output shaft. The torsion bar insertion portion has a diameter smaller than an inner diameter of the input shaft insertion portion, and the second end portion of the torsion bar is fixed to the small-diameter portion in a state of being press-fitted into the torsion bar insertion portion. An inner end face of the input shaft insertion portion, in the axial direction, includes a recess that is recessed in a direction from the first end portion toward the second end portion of the output shaft, the recess having an inner diameter that is smaller than the inner diameter of the input shaft insertion portion and that is larger than an inner diameter of the torsion bar insertion portion. A portion of the input shaft externally exposed from the input shaft insertion portion includes a sensor component making up a sensor device for detecting the torque, and the sensor component faces the first end portion of the output shaft in the axial direction. The abutting portion includes a distal end face that faces an inner end face of the recess in the axial direction of the input shaft, and an axial direction clearance, between the distal end face of the abutting portion and the inner end face of the recess, is narrower than an axial direction clearance between the sensor component and the first end portion of the output shaft.

### BRIEF DESCRIPTION OF THE DRAWINGS

[FIG. 1] FIG. 1 is a cross-sectional view of principal portions of a steering shaft according to an embodiment.
[FIG. 2] FIG. 2 is a cross-sectional view of principal portions of a steering shaft according to a comparative example.

### MODES FOR CARRYING OUT THE INVENTION

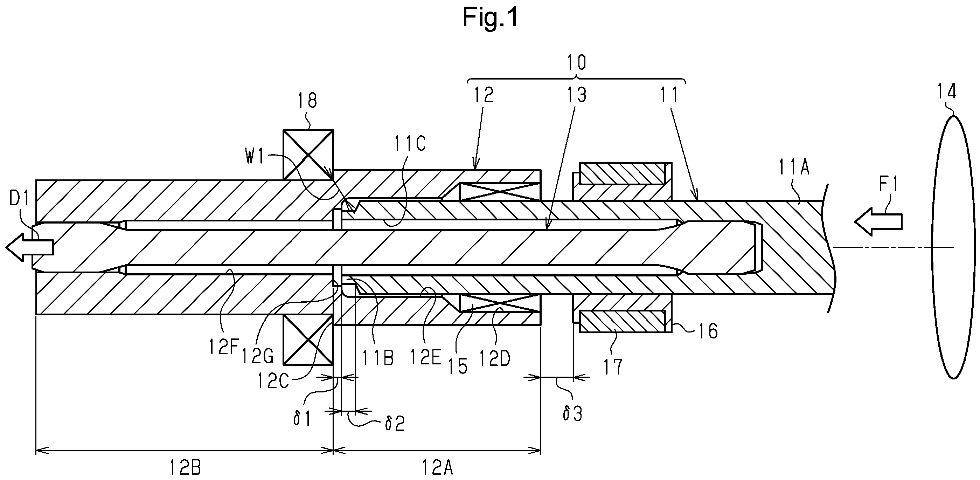

A steering shaft according to an embodiment will be described. As illustrated in FIG. 1, a steering shaft 10 is used in, for example, an electric power steering system of a vehicle. The steering shaft 10 includes an input shaft 11, an output shaft 12, and a torsion bar 13. The torsion bar 13 links the input shaft 11 and the output shaft 12.

The input shaft 11 is a solid cylindrical body having a circular cross-sectional shape, and includes an input shaft main body 11A and an abutting portion 11B. Torque is applied to a first end portion of the input shaft main body 11A by operating a steering wheel 14. The abutting portion 11B is a protruding portion provided on a second end portion of the input shaft main body 11A, and is a cylindrical body having a circular cross-sectional shape. An outer diameter of the abutting portion 11B is smaller than an outer diameter of the input shaft main body 11A. The input shaft 11 includes a fixing hole 11C. The fixing hole 11C is provided on an end face of the abutting portion 11B, in an axial direction thereof. The fixing hole 11C is a blind hole having a circular cross-sectional shape. The fixing hole 11C extends in a direction from the end face of the abutting portion 11B in the axial direction toward the first end portion of the input shaft 11.

The output shaft 12 is a hollow cylindrical body having a circular cross-sectional shape and is open at both ends in the axial direction. A second end portion of the input shaft 11 is rotatably inserted into the first end portion of the output shaft 12.

The output shaft 12 is a stepped cylindrical body including a large-diameter portion 12A and a small-diameter portion 12B. The large-diameter portion 12A is a portion that includes the first end portion of the output shaft 12. The small-diameter portion 12B is a portion that includes a second end portion of the output shaft 12. The outer diameter of the large-diameter portion 12A is larger than the outer diameter of the small-diameter portion 12B. A stepped face 12C is provided at a boundary between the large-diameter portion 12A and the small-diameter portion 12B. The stepped face 12C is a face situated on an imaginary plane extending in a direction perpendicular to the axial direction of the output shaft 12. The stepped face 12C is provided around the entire circumference of the steering shaft 10.

A bearing 18 is mounted to an outer peripheral face of the small-diameter portion 12B. The bearing 18 is, for example, a rolling bearing. The bearing 18 includes an inner ring, an outer ring, and a plurality of rolling elements. The rolling elements are balls, for example, and are rollably held between the inner ring and the outer ring. The bearing 18 is positioned in the axial direction by the stepped face 12C. That is to say, the inner ring of the bearing 18 abuts against the stepped face 12C in the axial direction, such that the movement of the bearing 18, in a direction from the second end portion of the output shaft 12 toward the first end portion thereof, is restricted. The inner ring of the bearing 18 is maintained in a state in contact with the stepped face 12C.

The output shaft 12 includes a first insertion portion 12D, a second insertion portion 12E, and a third insertion portion 12F. The first to third insertion portions 12D, 12E, 12F are portions that make up an inner peripheral face of the output shaft 12 and are in communication with one another. The first to third insertion portions 12D, 12E, 12F are arranged in order from the first end portion of the output shaft 12 toward the second end portion thereof. The first insertion portion 12D and the second insertion portion 12E are provided on the large-diameter portion 12A. The third insertion portion 12F is provided on the small-diameter portion 12B. The stepped face 12C is situated on the outer side in a radial direction from an inner peripheral face of the first insertion portion 12D and an inner peripheral face of the second insertion portion 12E. That is to say, the stepped face 12C does not overlap with the first insertion portion 12D and the second insertion portion 12E as viewed in the axial direction of the output shaft 12.

The first insertion portion 12D opens at a first end face of the output shaft 12. The second insertion portion 12E is disposed between the first insertion portion 12D and the third insertion portion 12F. The third insertion portion 12F opens at a second end face of the output shaft 12. Inner diameters of the first to third insertion portions 12D, 12E, and 12F become smaller in this order. The inner diameter of the first insertion portion 12D and the inner diameter of the second insertion portion 12E are larger than the outer diameter of the input shaft main body 11A.

A recess 12G is provided on an inner end face of the second insertion portion 12E in the axial direction. The recess 12G is a countersunk hole, having a circular cross-sectional shape, and extends in a direction from the first end portion toward the second end portion of the output shaft 12. In the axial direction of the output shaft 12, a position of an inner end face of the recess 12G matches a position of the stepped face 12C. An inner diameter of the recess 12G is larger than the inner diameter of the third insertion portion 12F, and smaller than the inner diameter of the second insertion portion 12E.

The second end portion of the input shaft 11 is inserted, in a non-contact state, into the second insertion portion 12E via the first insertion portion 12D. A bearing 15 is interposed between an outer peripheral face of the input shaft main body 11A and the inner peripheral face of the first insertion portion 12D. The bearing 15 is, for example, a needle bearing. The input shaft 11 is rotatably supported by the output shaft 12 via the bearing 15. The first insertion portion 12D and the second insertion portion 12E together make up an input shaft insertion portion.

In the axial direction of the input shaft 11, the second end portion of the input shaft main body 11 faces the inner end face of the second insertion portion 12E. The abutting portion 11B is situated within the second insertion portion 12E. In the axial direction of the input shaft 11, a first clearance δ1 is provided between a distal end face of the abutting portion 11B and the inner end face of the recess 12G. The distal end face is the end face of the abutting portion 11B on the opposite side from the input shaft main body 11A. In the axial direction of the input shaft 11, a second clearance δ2 is provided between the second end face of the input shaft main body 11 and the inner end face of the second insertion portion 12E. The first clearance δ1 is narrower than the second clearance δ2.

The torsion bar 13 is a rod-shaped body with a circular cross-sectional shape, and includes a first end portion and a second end portion. The outer diameters of the first end portion and the second end portion are larger than the outer diameter of a portion of the torsion bar 13 between the first end portion and the second end portion. The first end portion of the torsion bar 13 is fixed to the input shaft 11 in a state of having been press-fitted into the fixing hole 11A of the input shaft 11. The first end portion of the torsion bar is integrally rotatable with the input shaft 11. The second end portion of the torsion bar 13 is inserted into the third insertion portion 12F and is also externally exposed from the second end portion of the output shaft 12. The second end portion of the torsion bar 13 is fixed to the third insertion portion 12F in a state of being press-fitted to an inner peripheral face of the third insertion portion 12F. The second end portion of the torsion bar 13 is integrally rotatable with the output shaft 12. The third insertion portion 12F corresponds to a torsion bar insertion portion.

A sensor magnet 17 is fixed to an outer peripheral face of a portion of the input shaft 11 that is exposed from the output shaft 12, via a magnet holder 16. The magnet holder 16 and the sensor magnet 17 are cylindrical bodies having circular cross-sectional shapes. The sensor magnet 16 is a source of magnetic flux. The magnet holder 16 includes a first end face and a second end face. The first end face and the second end face are end faces of the magnet holder 16, situated on opposite sides to each other in the axial direction of the input shaft 11. The first end face is an end face of the holder 16 on a side farther from the output shaft 12 in the axial direction of the input shaft 11. The second end face is an end face of the holder 16 on a side closer to the output shaft 12 in the axial direction of the input shaft 11.

In the axial direction of the input shaft 11, a third clearance δ3 is provided between the second end face of the magnet holder 16 and the first end face of the output shaft 12. The third clearance δ3 is wider than the second clearance δ2. That is to say, of among the first to third clearances δ1, δ2, δ3, the first clearance δ1 is the narrowest and the third clearance δ3 is the widest.

The magnet holder 15 and the sensor magnet 16 are sensor components that make up a sensor device. The sensor device is, for example, a torque sensor that detects steering torque applied to the steering wheel 14. The steering torque applied to the steering wheel 14 is transmitted to the output shaft 12 via the input shaft 11 and the torsion bar 13. When the steering wheel is operated, the torsion bar 13 twists in response to the steering torque, causing relative rotation between the input shaft 11 and the output shaft 12. The sensor device detects the steering torque applied to the steering shaft 10, based on the magnetic flux corresponding to torsion amount of the torsion bar 13. The steering torque is used, for example, to control the electric power steering system.

### <Function of Present Embodiment>

Next, functions of the present embodiment will be described. In the event of a collision of the vehicle, a primary collision occurs in which the vehicle collides with another vehicle, a building, or the like, followed by a secondary collision in which a driver collides with the steering wheel 14 due to inertia caused by a sudden decrease in vehicle speed. An impact force F1 at the time of this secondary collision acts on the steering shaft 10 in a plunging direction D1, which is a direction in which the input shaft 11 is plunged into the output shaft 12. The impact force F1 is transmitted to the input shaft 11, the torsion bar 13, and the output shaft 12, in this order. In a case in which the impact force F1 exceeds a holding force of the second end portion of the torsion bar 13 press-fitted into the third insertion portion 12F, the input shaft 11 and the torsion bar 13 integrally move in the plunging direction D1.

Movement of the input shaft 11 and the torsion bar 13 in the plunging direction D1 is restricted by the distal end face of the abutting portion 11B abutting against the inner end face of the recess 12G in the axial direction. However, the first clearance δ1 is narrower than the second clearance δ2, and accordingly the distal end face of the abutting portion 11B abuts against the inner end face of the recess 12G before the second end face of the input shaft main body 11 abuts against the inner end face of the second insertion portion 12E. Also, the first clearance δ1 is narrower than the third clearance δ3, and accordingly the distal end face of the abutting portion 11B abuts against the inner end face of the recess 12G before the second end face of the magnet holder 16 abuts against the first end face of the output shaft 12. Thus, contact between the magnet holder 16 and the output shaft 12 is averted, and accordingly damage of the sensor magnet 17 is suppressed.

Note that the input shaft 11 includes the abutting portion 11B, and the output shaft 12 includes the recess 12G, and accordingly a thickness W1 of a wall of the output shaft 12 is ensured. The thickness W1 is a length between a first corner portion at which the outer peripheral face of the small-diameter portion 12B intersects with the stepped face 12C, and a second corner portion at which the inner peripheral face of the first insertion portion 12E intersects with the inner end face in the axial direction. More specifically, the thickness W1 is a length of the wall of the output shaft 12 in a direction connecting the first corner portion and the second corner portion.

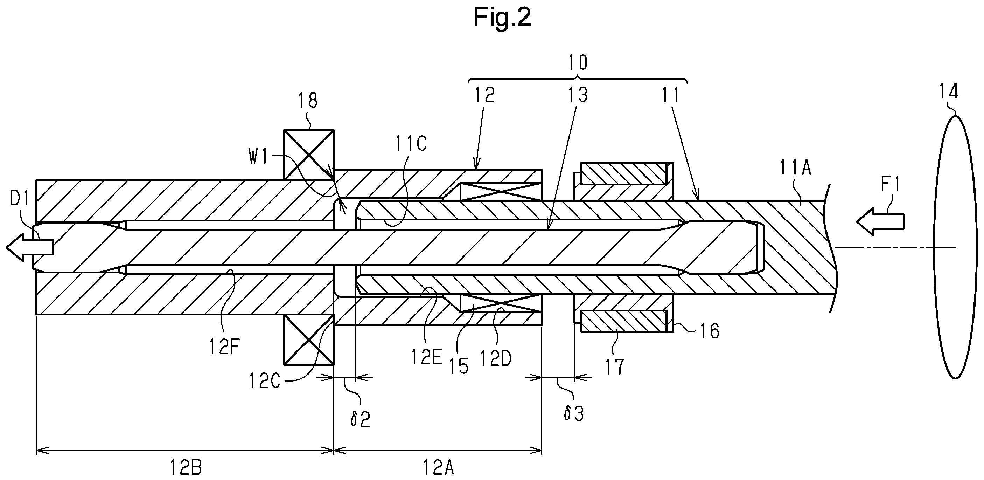

As a comparative example, a case will be considered regarding employing a configuration in which the abutting portion 11 is omitted from the input shaft 11 and also the recess 12 is omitted from the output shaft 12. As illustrated in FIG. 2, in a case in which the abutting portion 11 is omitted from the input shaft 11, the input shaft main body 12A becomes the input shaft 12 itself. Also, in a case in which the recess 12 is omitted from the output shaft 12, for example, the axial direction length of the second insertion portion 12E is extended in the plunging direction D1 by an amount equivalent to the axial direction length of the recess 12. In this case, an axial direction position of the inner end face of the second insertion portion 12E matches with an axial direction position of the stepped face 12C, for example. Accordingly, the thickness W1 of the wall of the output shaft 12 in the comparative example illustrated in FIG. 2 is thinner than the thickness W1 of the wall of the present embodiment illustrated in FIG. 1.

Note, however, that, the second clearance δ2 is narrower than the third clearance δ3. The second clearance δ2 is an axial direction clearance between the second end face of the input shaft main body 11 and the inner end face of the second insertion portion 12E. The third clearance δ3 is an axial direction clearance between the second end face of the magnet holder 16 and the first end face of the output shaft 12. When a secondary collision occurs, the movement of the input shaft 11 and the torsion bar 13 in the plunging direction D1 is restricted by the second end face of the input shaft main body 12A abutting against the inner end face of the second insertion portion 12E in the axial direction.

In the present embodiment, the axial direction position of the inner end face of the second insertion portion 12E is situated on the opposite side in the plunging direction D1 by an amount equivalent to the axial direction length of the recess 12 from the axial direction position of the inner end face of the second insertion portion 12E in the comparative example. That is to say, the inner end face of the second insertion portion 12E according to the present embodiment is farther away from the stepped face 12C in the direction opposite to the plunging direction D1 than the inner end face of the second insertion portion 12E according to the comparative example. Thus, according to the present embodiment, the thickness W1 of the wall of the output shaft 12 can be ensured as compared to the comparative example.

Accordingly, contact between the output shaft 12 and the magnet holder can be averted while suppressing decrease in strength of the overall output shaft 12. Also, the strength of the overall output shaft 12 is ensured. Accordingly, in the event of a secondary collision occurring, part of the output shaft 12 is suppressed from being deformed or broken under the impact when the distal end face of the abutting portion 11B abuts against the inner end face of the recess 12G in the axial direction. The portion of the output shaft 12 that is readily deformed or broken is, for example, the portion having the thickness W1 between the first corner portion and the second corner portion of the output shaft 12.

### <Effects of Present Embodiment>

The present embodiment yields the following effects.
(1) The input shaft 11 includes the input shaft main body 11A and the abutting portion 11B. The second end portion of the input shaft main body 11A includes the fixing hole 11C into which the first end portion of the torsion bar 13 is press-fitted. The output shaft 12 includes the large-diameter portion 12A and the small-diameter portion 11B. The large-diameter portion 11A includes the first insertion portion 12D and the second insertion portion 12E, and the small-diameter portion 11B includes the third insertion portion 12F. The first insertion portion 12D and the second insertion portion 12E together make up the input shaft insertion portion. The third insertion portion 12F corresponds to the torsion bar insertion portion.

An inner end face of the input shaft insertion portion in the axial direction includes the recess 12G recessed in the direction from the first end portion toward the second end portion of the output shaft 12. The inner diameter of the recess 12G is smaller than an inner diameter of the input shaft insertion portion, and is larger than an inner diameter of the torsion bar insertion portion. The abutting portion 11B includes the distal end face facing the inner end face of the recess 12G in the axial direction of the input shaft 11. The first clearance δ1, which is the axial direction clearance between the distal end face of the abutting portion 11B and the inner end face of the recess 12G, is narrower than the third clearance δ3, which is the axial direction clearance between the sensor components and the first end portion of the output shaft 12. The sensor components include the magnet holder 16 and the sensor magnet 17.

In a case of a secondary collision occurring, in which the driver collides with the steering wheel 14, there are instances in which the input shaft 11 moves together with the torsion bar 13 in the plunging direction D1. The plunging direction D1 is the direction in which the input shaft 11 is plunged into the output shaft 12. **In** this case, the distal end face of the abutting portion 11B abuts the inner end face of the recess 12G in the axial direction, before the sensor component abuts the first end portion of the output shaft 12 in the axial direction. Thus, the sensor components can be protected.

Also, the inner end face of the input shaft insertion portion includes the recess 12G. Accordingly, an axial direction position of the inner end face of the input shaft insertion portion is situated on an opposite side of an axial direction position of the stepped face 12C in the plunging direction D1, by an amount equivalent to the axial direction length of the recess 12G. Thus, the wall thickness W1 of the output shaft 12 can be secured as compared to a case of extending the axial direction length of the input shaft insertion portion in the plunging direction D1 by an amount equivalent to the axial direction length of the recess 12G instead of providing the recess 12G. Also, the strength of the output shaft 13 can be ensured. The thickness W1 is the length between the first corner portion at which the outer peripheral face of the small-diameter portion 12B intersects with the stepped face 12C, and the second corner portion at which the inner peripheral face of the first insertion portion 12E intersects with the inner end face in the axial direction.

(2) The stepped face 12C, extending in the direction perpendicular to the axial direction of the output shaft 12, is provided at the boundary between the large-diameter portion 12A and the small-diameter portion 12B. The axial direction position of the inner end face of the recess 12G matches with the axial direction position of the stepped face 12C. Accordingly, the thickness W1 of the wall of the output shaft 12 can be secured as compared to a case of extending the axial direction length of the input shaft insertion portion such that the axial direction position of the inner end face of the input shaft insertion portion matches with the axial direction position of the stepped face 12C instead of providing the recess 12G.

(3) The stepped face 12C is situated outward in the radial direction from the inner peripheral face of the input shaft insertion portion. In the steering shaft 10 having this configuration, portions at which the thickness W1 of the wall of the output shaft 12 is thin are readily formed, depending on the inner diameter or the depth of the input shaft insertion portion. The depth is the axial direction length of the input shaft insertion portion. Accordingly, the present embodiment is suitable for the steering shaft 10 including the output shaft 12 that is a stepped cylindrical body.

(4) The clearance between the distal end face of the abutting portion 11B and the inner end face of the recess 12G is the first clearance δ1. The axial direction clearance between the second end portion of the input shaft main body 11A and the inner end face of the input shaft insertion portion is the second clearance δ2. The axial direction clearance between the sensor components and the first end portion of the output shaft 12 is the third clearance δ3. The first clearance δ1 is narrower than the second clearance δ2. The second clearance δ2 is narrower than the third clearance δ3. According to this configuration, in a case in which a secondary collision occurs, the distal end face of the abutting portion 11B can be made to abut the inner end face of the recess 12G in the axial direction first.

### <Other Embodiments>

The present embodiment may be carried out modified as follows.
- The axial direction position of the inner end face of the recess 12G does not have to match with the axial direction position of the stepped face 12C. For example, the axial direction position of the inner end face of the recess 12G may be situated on the opposite side of the axial direction position of the stepped face 12C in the plunging direction D1.
- It is sufficient for the stepped face 12C to be situated outward in the radial direction from the inner peripheral face of the second insertion portion 12E. For example, at least part of the stepped face 12C may overlap the first insertion portion 12D as viewed in the axial direction of the output shaft 12. The expression "at least part of A" as used in the present specification means "part of A, or all of A".

## Claims

1. A steering shaft comprising:
an input shaft;
an output shaft; and
a torsion bar, wherein
the input shaft includes an input shaft main body that includes a first end portion to which torque is applied by operation of a steering wheel and a second end portion at which a fixing hole that is a blind hole extending in an axial direction opens, and an abutting portion that is provided at the second end portion of the input shaft main body, and that has a diameter smaller than that of the input shaft main body,
the output shaft is a cylindrical body that has a circular cross-sectional shape with both ends open in the axial direction, and includes a large-diameter portion including a first end portion of the output shaft and a small-diameter portion including a second end portion of the output shaft,
the torsion bar includes a first end portion that is fixed to the input shaft in a state of being press-fitted into the fixing hole, and a second end portion that is fixed to the output shaft in a state of being press-fitted within the output shaft,
the large-diameter portion includes an input shaft insertion portion that opens to the first end portion of the output shaft, and a second end portion of the input shaft is rotatably inserted into the input shaft insertion portion,
the small-diameter portion includes a torsion bar insertion portion that opens to the second end portion of the output shaft, the torsion bar insertion portion has a diameter smaller than an inner diameter of the input shaft insertion portion, and the second end portion of the torsion bar is fixed to the small-diameter portion in a state of being press-fitted into the torsion bar insertion portion,
an inner end face of the input shaft insertion portion, in the axial direction, includes a recess that is recessed in a direction from the first end portion toward the second end portion of the output shaft, the recess having an inner diameter that is smaller than the inner diameter of the input shaft insertion portion and that is larger than an inner diameter of the torsion bar insertion portion,
a portion of the input shaft externally exposed from the input shaft insertion portion includes a sensor component making up a sensor device for detecting the torque, and the sensor component faces the first end portion of the output shaft in the axial direction, and
the abutting portion includes a distal end face that faces an inner end face of the recess in the axial direction of the input shaft, and an axial direction clearance, between the distal end face of the abutting portion and the inner end face of the recess, is narrower than an axial direction clearance between the sensor component and the first end portion of the output shaft.

2. The steering shaft according to claim 1, wherein:
a stepped face, extending in a direction perpendicular to the axial direction of the output shaft, is provided at a boundary between the large-diameter portion and the small-diameter portion; and
an axial direction position of the inner end face of the recess matches with an axial direction position of the stepped face.

3. The steering shaft according to claim 1 or 2, wherein:
a stepped face, extending in a direction perpendicular to the axial direction of the output shaft, is provided at a boundary between the large-diameter portion and the small-diameter portion; and
the stepped face is situated outward in a radial direction from an inner peripheral face of the input shaft insertion portion.

4. The steering shaft according to claim 1 or 2, wherein:
an axial direction clearance between the distal end face of the abutting portion and the inner end face of the recess is a first clearance;
an axial direction clearance between the second end portion of the input shaft main body and the inner end face of the input shaft insertion portion is a second clearance;
an axial direction clearance between the sensor component and the first end portion of the output shaft is a third clearance; and
the first clearance is narrower than the second clearance, and the second clearance is narrower than the third clearance.
